# EUROPÄISCHE PATENTSCHRIFT

(11) **EP 1 908 655 B1**
(45) Veröffentlichungstag und Bekanntmachung des Hinweises auf die Patenterteilung: **02.09.2015**
(21) Anmeldenummer: 07115800.0
(22) Anmeldetag: 06.09.2007
(51) Int. Cl.: B60S 1/40

(54) **Wischervorrichtung für eine Panoramascheibe**
Wiper device for a panoramic windscreen
Dispositif d'essuyage pour une vitre panoramique

(30) Priorität: 04.10.2006 DE 102006046913; 06.07.2007 DE 102007031560
(43) Veröffentlichungstag der Anmeldung: 09.04.2008
(73) Patentinhaber: ROBERT BOSCH GMBH, 70442 Stuttgart (DE)
(72) Erfinder: Kruse, Michael, 77815 Buehl (DE); Volz, Heiko, 76135 Karlsruhe (DE)

(56) Entgegenhaltungen:
- EP-A2- 1 707 459
- EP-B1- 1 332 074
- DE-A1- 19 709 051
- JP-A- 63 199 160
- US-A- 2 973 542
- US-A- 3 393 421

## Beschreibung

### Stand der Technik

Die Erfindung betrifft eine Wischervorrichtung für eine Panoramascheibe eines Fahrzeugs. Dazu weist die Wischervorrichtung einen Wischerarm auf. Der Wischerarm ist mit einem fixierten Ende an einer Abtriebswelle eines Schwenkgetriebes über ein erstes Kippgelenk fixiert. An einem schwenkbaren Ende weist der Wischerarm ein Wischerblatt auf, das über eine Wischerblattaufnahme mit einem zweiten Kippgelenk an dem schwenkbaren Ende des Wischerarms angeordnet ist.

Bei Panoramascheiben handelt es sich um Windschutzscheiben von Fahrzeugen, die ein verbreitertes Sichtfeld aufweisen, das durch ein nach hinten Ziehen der A-Säulen der Windschutzscheibe erreicht wird. Damit ist ein erweitertes Sichtfeld für den Fahrer in horizontaler Richtung verbunden. Diese konstruktive Maßnahme bringt jedoch eine starke Krümmung der Scheibe mit sich, die dabei teilweise Werte des Krümmungsradius von unter 1200 mm erreicht. Im Extremfall können Krümmungsradien von nur noch 700 mm im Bereich zu der A-Säule auftreten. Optimale Wischergebnisse mit gängigen Wischeranlagen können bisher nur bei Krümmungsradien von 2000 mm bis 8000 mm erzielt werden. Die besondere Schwierigkeit ergibt sich daraus, dass keine homogene Krümmung über den gesamten Verlauf der Panoramascheibe vorliegt, sondern vor allem zu den Seiten der ursprünglichen Positionen der A-Säulen hin die oben erwähnten besonders hohen Krümmungswerte auftreten.

Aus der starken Krümmung zu den heutigen A-Säulen hin ergibt sich die erhöhte Schwierigkeit für die Kinematik der Wischervorrichtungen, die zu einer Abnahme der Wischqualität führen kann. Während der Wischbewegung kommt das freie obere Ende des Wischers in einem Bereich mit nur einem relativ flachen Winkel zum Anliegen, bzw. überstreicht diesen Bereich in einer weitgehend gestreckten Stellung. Je flacher dieser Winkel ist, umso mehr müsste das Wischerblatt verformt werden, um an die Krümmung der Windschutzscheibe quer zur Längsrichtung des Fahrzeugs angepasst zu werden. Ein gleichmäßiger Anpressdruck kann folglich nur schwer erreicht werden. Die Wischqualität nimmt infolge dessen ab. Hinzu kommt die Gefahr des Aufliegens der Federschiene an einem zu flachen Winkel zur Scheibe, was zu einem Rattern und im schlimmsten Fall zu einem Verkratzen der Panoramascheibe führen kann. Weitere Folgen sind Geräuschzunahme an der Umkehrposition des Wischers und eine Schleierbildung infolge des nicht exakten Aufliegens der Wischlippe des Wischers auf der Panoramascheibe.

Herkömmliche Wischeranlagen werden in den Befestigungspunkten über ein Entkopplungselement, dem ersten Kippgelenk, mit der Fahrzeugkarosserie fest verschraubt. Das Wischergelenk ist in einem Schaft als zweites Kippgelenk kippend gelagert, welcher mit den Befestigungspunkten über das Entkopplungselement - dem ersten Kippgelenk - verbunden ist. Um den geforderten Wert des Anstellwinkels des Wischerblatts zur Windschutzscheibe zu erreichen, braucht man gerade bei stark gekrümmten Windschutzscheiben ein Wischergelenk, welches die Wischlippe jeder Wischwinkelposition der Scheibenkrümmung optimal anpasst.

Besonders die herkömmlichen Wischergelenke stellen infolge ihrer steifen Anbindung, die für eine genaue Einhaltung der Wischwinkel sorgen, ein Hindernis dar. Auch die damit verbundene starre Anbindung des Wischerblatts des Wischers zum Wischarm stellt ein Hindernis bezüglich der dynamischen Veränderung des Wischfelds im Bereich der A-Säule dar. Somit können die Anforderungen, die an die Reinigung von stark gekrümmten Panoramascheiben - gerade im Bereich hin zur A-Säule - gestellt werden, mit den bekannten Wischvorrichtungskonzepten nicht erfüllt werden.

Aus der Druckschrift DE 10 2005 052 035 A1 A1 ist eine Wischanlage für Panoramascheiben an Kraftfahrzeugen bekannt. Dazu weist die Wischanlage mindestens ein Wischerblatt auf, das an einem schwenkbaren Wischerarm über die Panoramascheibe geführt werden kann. Ferner weist die bekannte Wischeranlage ein um eine Achse schwenkbares Befestigungsteil auf und ein erstes Kippgelenk, welches den Wischerarm mit dem schwenkbaren Befestigungsteil verbindet. Dabei ist die Kippgelenkachse in der Ebene angeordnet, in der das Befestigungsteil geschwenkt wird. Die Kippgelenkachse weicht jedoch von einer Senkrechten zur Hauptachse des Wischerarms ab. Diese Wischeranlage mit winklig gegenüber der Hauptachse des Wischerarms versetzter erster Kippachse kann jedoch den starken Krümmungen zur A-Säule eines Fahrzeugs hin nicht so gut folgen, dass eine optimale Reinigung der Panoramascheibe in diesem kritischen Bereich gewährleistet ist.

Aus der Druckshrift US 2 973 542 A ist eine Wischvorrichtung nach dem Oberbegriff des Anspruchs 1 bekannt.

### Aufgabe der Erfindung

Aufgabe der Erfindung ist es, eine Wischervorrichtung und ein Verfahren zur Reinigung von Panoramascheiben zu schaffen, welche es ermöglicht, die Bereiche einer Panoramascheibe mit Scheibenkrümmung besser zu reinigen.

### Lösung der Aufgabe

Gelöst wird diese Aufgabe mit dem Gegenstand des unabhängigen Anspruchs. Vorteilhafte Weiterbildungen der Erfindung ergeben sich aus den abhängigen Ansprüchen.

Erfindungsgemäß wird eine Wischervorrichtung für eine Panoramascheibe eines Fahrzeugs und ein Verfahren zur Reinigung der Panoramascheibe geschaffen. Dazu weist die Wischervorrichtung einen Wischerarm auf. Der Wischerarm ist mit einem fixierten Ende an einer Abtriebswelle eines Schwenkgetriebes über ein Kippgelenk fixiert. An einem schwenkbaren Ende weist der Wischerarm ein Wischerblatt auf, das über eine Wischerblattaufnahme mit Kippgelenk an dem schwenkbaren Ende des Wischerarms angeordnet ist. Das Wischerblatt ist seitlich versetzt zum schwenkbaren Ende des Wischerarms angeordnet. Zwischen dem schwenkbaren Ende des Wischerarms und dem Wischerblatt weist die Wischervorrichtung ein elastisches Element auf.

### Vorteile und Wirkungsweise der Erfindung

Die erfindungsgemäße Wischervorrichtung hat aufgrund des elastischen Elements, das nicht nur wie bisher eine Kippbewegung um eine zweite Kippachse zulässt, sondern zusätzlich die Möglichkeit bietet, einer extremen Krümmung einer Panoramascheibe mit dem Wischerblatt zu folgen, den Vorteil, dass lediglich das Wischerblatt versetzt zu dem schwenkbaren Ende des Wischerarms anzuordnen ist, um die Elastizität des elastischen Elements für ein Anpassen des Wischerblattes an eine gekrümmte Oberfläche einer Panoramascheibe zu nutzen. Gleichzeitig wird damit die steife Anbindung des Wischerblattes an das schwenkbare Ende des Wischerarms durch die bisher übliche zweite Kippmöglichkeit des Wischers gegenüber der Windschutzscheibe aufgehoben.

Dabei kann das elastische Element am Wischerarm, an der Wischerblattaufnahme oder am Wischerblatt selbst seitlich versetzt angeordnet sein. Mit dieser seitlichen Versetzung zwischen Wischerblatt und Wischerarm wird durch die Veränderung des Hubwinkels und der damit verbundenen Veränderung der Auflagekraft mehr oder weniger Biegemoment auf das Wischerblatt übertragen und damit eine Änderung des Anstellwinkels zur Scheibennormalen erzeugt.

Gesteuert wird diese Bewegung des seitlich zum Wischerarm versetzten Wischerblattes durch die variierende Anpresskraft, hervorgerufen durch den vom Wischerwinkel abhängigen Hubwinkelverlauf, wobei die variierende Anpresskraft durch den ausführungsbedingten Hebelarm ein Moment auf die Aufnahme ausübt. Durch die elastische Verformung des elastischen Elements findet eine aktive Steuerung des Anstellwinkels des Wischerblattes statt. Über zusätzliche Stützelemente am Wischerblatt kann ein Kippen über den optimalen Bereich des Anstellwinkels von plus fünf Grad bis minus vier Grad hinaus verhindert werden. Durch Einschränken der Bewegungs- und Kippfreiheit quer zur Wischerarmlängsrichtung wird ein Anschlagen des Wischerrückens auf der Scheibe verhindert.

Durch das elastische Element kann der für das Wischerblatt bzw. die Wischerlippe geforderte optimale Anstellwinkel zur Panoramascheibe in vorteilhafter Weise realisiert werden. Dazu ist es nicht erforderlich, das Standarddesign eines Wischerhebels bzw. eines Wischerarms in Zusammenwirkung mit einem Wischerblatt herkömmlicher Art grundlegend zu verändern. Auch ein zusätzlicher Bauraumbedarf für die Kinematik der erfindungsgemäßen Wischervorrichtung ist nicht notwendig. Schließlich folgt die Anstellwinkelsteuerung automatisch über gegebene Verhältnisse und es sind keine zusätzlichen Hilfsmittel zur Steuerung des Wischerblattes notwendig. Bis auf das elastische Element, das hier zur seitlichen Versetzung des Wischerblattes gegenüber dem Wischerarm eingefügt wird, sind keine zusätzlichen Verschleißteile erforderlich. Darüber hinaus ist die erfindungsgemäße Wischervorrichtung nahezu kostenneutral und völlig geräuscharm.

In einer bevorzugten Ausführungsform der Erfindung weist das elastische Element einen Faltenbalg auf. Ein derartiger Faltenbalg kann selber als elastisches Element vorbereitet werden, wenn dem Faltenbalg im entlasteten Zustand eine Krümmung aufgeprägt wird, wobei diese Krümmung des elastischen Elements größer als die maximale auftretende Krümmung der Panoramascheibe ist. Dabei unterscheidet sich eine starke Krümmung von einer geringen oder schwachen Krümmung dadurch, dass der Krümmungsradius eine starken Krümmung geringer ist als der Krümmungsradius einer schwachen oder geringen Krümmung. Außerdem kann ein Faltenbalg auch nur als Schutz vorgesehen werden, der selbst keine elastischen Eigenschaften aufweist und lediglich ein elastisches Element vor Beschädigungen schützt.

Der Vorteil eines elastischen Elements, das im elastischen Zustand eine Krümmung aufweist, die größer ist als die maximale auftretende Krümmung der Panoramascheibe, liegt darin, dass das Wischerblatt selbst bei der maximal auftretenden Krümmung der Panoramascheibe noch von dem elastischen Element auf die Oberfläche der Panoramascheibe gepresst wird und sich ein Anstellwinkel einstellt, der selbst im maximal gekrümmten Oberflächenbereich nahezu der Normalen zu der Oberfläche der Panoramascheibe entspricht. Dazu ist das elastische Element im belasteten Zustand in Richtung auf die Oberfläche der Panoramascheibe vorgespannt. Diese Vorspannung wird durch entsprechende Vorspannungselemente am Wischerarm wie bei konventionellen Wischeranlagen sichergestellt.

In einer weiteren Ausführungsform der Erfindung ist das elastische Element zwischen dem Wischerblatt und der Wischerblattaufnahme angeordnet, wobei die Wischerblattaufnahme mit dem zweiten Kippgelenk am schwenkbaren Ende des Wischerarms fixiert ist. Bei dieser Ausführungsform der Erfindung wird lediglich das Wischerblatt einer konventionellen Wischervorrichtung ausgewechselt und durch ein Wischerblatt ersetzt, welches das elastische und vorgekrümmte Element aufweist. Mit diesem elastische Element wird das Wischerblatt an dem schwenkbaren Ende des Wischerarms über eine dort befindliche Wischerblattaufnahme mit einem zweiten Kippelement angebracht.

Alternativ kann das elastische Element auch zwischen der Wischerblattaufnahme und dem schwenkbaren Ende des Wischerarms angeordnet sein, wobei die Wischerblattaufnahme mit zweitem Kippgelenk seitlich versetzt zum Wischerarmende angeordnet ist. In diesem Fall wird der Wischerarm mit der starren Zuordnung des zweiten Kippgelenks am Wischerarmende gegen einen Wischerarm ausgetauscht, der an seinem Wischerarmende das elastische und vorgekrümmte Element aufweist, an dem seitlich versetzt die Wischerblattaufnahme herkömmlicher Art mit zweitem Kippgelenk fixiert ist. Mit dieser Variante ist der Vorteil verbunden, dass herkömmliche Wischerblätter unverändert in der Wischerblattaufnahme angeordnet werden können.

Erfindungsgemäß weist das elastische Element ein gummielastisches Element auf. Auch gummielastische Elemente können vorgekrümmt sein und dadurch einen entsprechenden Druck auf das Wischerblatt noch in einem Oberflächenbereich mit starker Krümmung auf die Panoramascheibe ausüben. Ferner ist es möglich, das elastische Element aus einem Metallgummielement herzustellen, wobei der gekrümmte Bereich gummielastisch ist und die Fixierungsenden des Metallgummielements, die einerseits mit dem Wischerarm und andererseits mit der Wischerblattaufnahme zu verbinden sind, aus metallischen Verbindungselementen bestehen.

Die Erfindung wird nun anhand der beigefügten Figur näher erläutert.

### Kurze Beschreibung der Figur

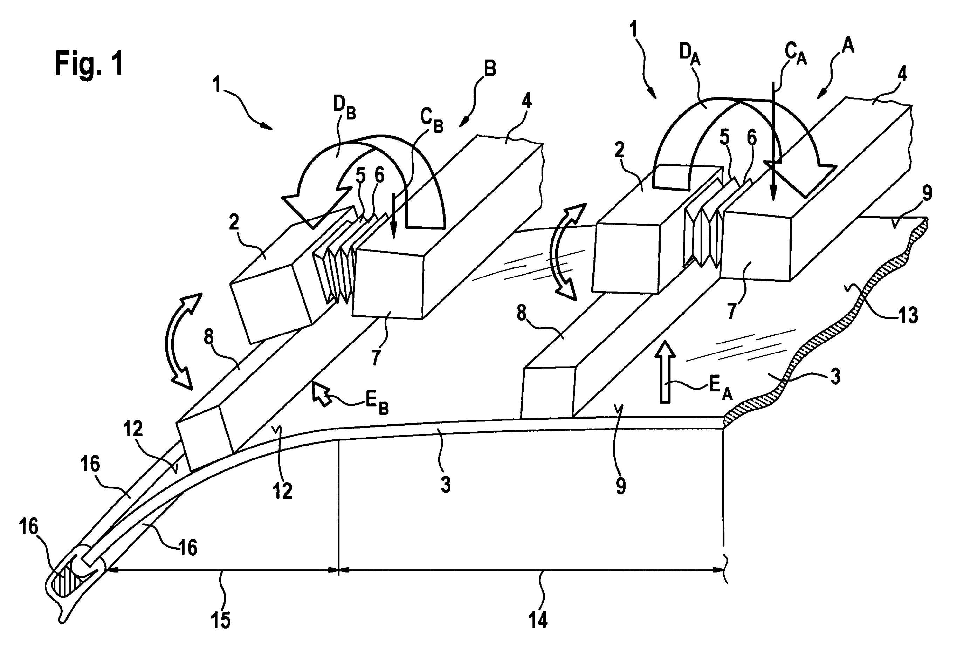

- Figur 1: zeigt eine Prinzipskizze einer Panoramascheibe mit einer Wischervorrichtung gemäß einer Ausführungsform der Erfindung.

Von der Panoramascheibe 3 sind in Figur 1 lediglich Ausschnitte gezeigt, die einen Oberflächenbereich 13 mit geringer Krümmung 14 zeigen und einen Oberflächenbereich 12 mit einer starken Krümmung 15 zu einer A-Säule 16 hin.

Die Wischervorrichtung ist hier in zwei Positionen A und B gezeigt, wobei die erste Position A im Bereich 13 der Panoramascheibe 3 mit geringer Krümmung 14 angeordnet ist und die Position B ein Beispiel für das Verhalten der erfindungsgemäßen Wischervorrichtung im Bereich 12 mit starker Krümmung 15 zeigt.

Die Wischervorrichtung 1 weist einen Wischerarm 4 auf, der mit einem Schwenkgelenk zusammenwirkt. Von dem Wischerarm 4 ist in Figur 1 das freie schwenkbare Ende 7 gezeigt, an dem in dieser Ausführungsform der Erfindung eine Wischerblattaufnahme 2 mit einem zweiten Kippgelenk nicht direkt angeordnet ist. Vielmehr ist ein elastisches Element 5, das hier einen Faltenbalg 6 aufweist, seitlich am schwenkbaren Ende 7 des Wischerarms 4 derart angeordnet. Beim Anpressen des schwenkbaren Endes 7 in Pfeilrichtung C_{A} in der Position A tritt ein Drehmoment in Pfeilrichtung D_{A} auf, das die an dem Federelement 5 angebrachte Wischerblattaufnahme 2 mit einem Wischerblatt 8 in Richtung auf die Oberfläche 9 der Panoramascheibe 3 presst.

Das Drehmoment, das durch die Vorspannung des Wischerarms 4 in Pfeilrichtung D_{A} ausgeübt wird, ist so bemessen, dass das vorgekrümmte elastische Element 5 nahezu parallel zur Oberfläche 9 der Panoramascheibe in diesem gering gekrümmten Oberflächenbereich 13 angeordnet ist. Dadurch entsteht ein Auflagedruck auf die Oberfläche 9 der Panoramascheibe 3, welchem die Panoramascheibe 3 in Pfeilrichtung E_{A} entgegen wirkt.

Sobald der Wischerarm 4 in den Bereich mit starker Krümmung 15 weiterschwenkt, reagiert die erfindungsgemäße Wischervorrichtung 1 wie es Position B zeigt. Das Federelement 5 bewirkt ein Drehmoment D_{B}, so dass das Wischerblatt 8 mit der Wischerblattaufnahme 2 auf den stark gekrümmten Oberflächenbereich 12 in der Nähe der A-Säule 16 des Fahrzeugs gepresst wird. Dazu ist das Federelement 5 vorgekrümmt und weist einen Krümmungsradius auf, der deutlich kleiner ist als der Krümmungsradius der maximalen Krümmung 15 der Panoramascheibe 3. Damit verbleibt, trotz der mit der Pfeilrichtung C_{B} gezeigten verminderten Anpresskraft des schwenkbaren Endes 7 auf die Panoramascheibe 3 in diesem Bereich, ein genügender Anpressdruck auf den stark gekrümmten Oberflächenbereich 12 der Panoramascheibe 3 erhalten, so dass eine gründliche Reinigung weiterhin gewährleistet ist.

Der in Figur 1 gezeigt Faltenbalg 6 kann aus einem vorgekrümmten federelastischen Material bestehen. Der Federbalg 6 kann jedoch auch lediglich eine Schutzhülle für ein elastisches Element 5 bilden, das innerhalb der Federbalgs angeordnet ist.

Das konventionell am schwenkbaren Ende 7 des Wischerarms 4 angeordnete zweite Kippgelenk für das Wischerblatt 8 ist bei dieser Ausführungsform der Erfindung in der Wischerblattaufnahme 2 integriert und somit seitlich versetz zu dem schwenkbaren Wischerarmende 7 angeordnet. Es kann jedoch auch wie bisher in dem schwenkbaren Wischerarmende 7 integriert sein. In einem solchen Fall ist das elastische Element 5 zwischen Wischerblatt und schwenkbarem Wischerarmende 7 angeordnet.

Das vorgekrümmte und elastische Element 5 sorgt selbst in einem stark gekrümmten Bereich, wie er in Position B gezeigt wird, dafür dass das Wischerblatt 8 an der Panoramascheibe ständig anliegt.

## Patentansprüche

1. Wischervorrichtung für eine Panoramascheibe (3) eines Fahrzeugs mit einer vorgegebenen maximalen Krümmung, wobei die Wischvorrichtung (1)
- einen Wischerarm (4), der mit einem fixierten Ende an einer Abtriebswelle eines Schwenkgetriebes über ein erstes Kippgelenk fixierbar ist und ein schwenkbares Ende (7) aufweist, und
- einen Wischerblatt (8) umfasst, das über eine Wischerblattaufnahme (2) mit einem zweiten Kippgelenk an dem schwenkbaren Ende (7) des Wischerarms (4) seitlich versetzt zum schwenkbaren Ende (7) des Wischerarms (4) angeordnet ist, wobei
- die Wischervorrichtung (1) zwischen dem schwenkbaren Ende (7) des Wischerarms (4) und dem Wischerblatt (8) ein elastisches Element (5) aufweist, **dadurch gekennzeichnet, dass**
- das elastische Element (5) ein gummielastisches Element aufweist,
- wobei das elastische Element (5) im entlasteten Zustand eine Krümmung aufweist, wobei die Krümmung des elastischen Elements (5) größer als die maximale auftretende Krümmung der Panoramascheibe (3) ist.

2. Wischervorrichtung nach Anspruch 1,
**dadurch gekennzeichnet, dass**
das elastische Element (5) in einem Faltenbalg (6) angeordnet ist.

3. Wischervorrichtung nach Anspruch 2,
**dadurch gekennzeichnet, dass**
das elastische Element (5) im belasteten Zustand in Richtung auf die Oberfläche (9) der Panoramascheibe (3) vorgespannt ist.

4. Wischervorrichtung nach Anspruch 2,
**dadurch gekennzeichnet, dass**
das elastische Element (5) zwischen dem Wischerblatt (8) und der Wischerblattaufnahme (2) angeordnet ist, wobei die Wischerblattaufnahme (2) mit dem zweiten Kippgelenk am schwenkbaren Ende (7) des Wischerarms (4) fixiert ist.

5. Wischervorrichtung nach einem der Ansprüche 1 bis 3,
**dadurch gekennzeichnet, dass**
das elastische Element (5) zwischen der Wischerblattaufnahme (2) und dem schwenkbaren Ende (7) des Wischerarms (4) angeordnet ist, wobei die Wischerblattaufnahme (2) mit zweitem Kippgetenk seitlich versetzt zum Wischerarm (4) angeordnet ist.

6. Wischervorrichtung nach einem der Ansprüche 1 bis 5,
**dadurch gekennzeichnet, dass**
das elastische Element (5) ein Metallgummielement aufweist.

## Claims

1. Wiper device for a panoramic windscreen (3) of a vehicle with a predefined maximum curvature, wherein the wiper device (1)
- has a wiper arm (4) which can be fixed by way of a fixed end to an output shaft of a pivoting gear by way of a first tilt joint and which has a pivotable end (7), and
- comprises a wiper blade (8) which, by way of a wiper blade holder (2) with a second tilt joint, is arranged on the pivotable end (7) of the wiper arm (4) so as to be laterally offset with respect to the pivotable end (7) of the wiper arm (4), wherein
- the wiper device (1) has an elastic element (5) between the pivotable end (7) of the wiper arm (4) and the wiper blade (8), **characterized in that**
- the elastic element (5) has a rubber-elastic element,
- wherein the elastic element (5) has a curvature in the unloaded state, wherein the curvature of the elastic element (5) is greater than the maximum curvature of the panoramic windscreen (3).

2. Wiper device according to Claim 1,
**characterized in that**
the elastic element (5) is arranged in a corrugated bellows (6).

3. Wiper device according to Claim 2,
**characterized in that**
the elastic element (5), in the loaded state, is prestressed in the direction of the surface (9) of the panoramic windscreen (3).

4. Wiper device according to Claim 2,
**characterized in that**
the elastic element (5) is arranged between the wiper blade (8) and the wiper blade holder (2), wherein the wiper blade holder (2) is fixed by way of the second tilt joint to the pivotable end (7) of the wiper arm (4).

5. Wiper device according to one of Claims 1 to 3,
**characterized in that**
the elastic element (5) is arranged between the wiper blade holder (2) and the pivotable end (7) of the wiper arm (4), wherein the wiper blade holder (2) with second tilt joint is arranged laterally offset with respect to the wiper arm (4).

6. Wiper device according to one of Claims 1 to 5,
**characterized in that**
the elastic element (5) has a metal-rubber element.

## Revendications

1. Dispositif d'essuie-glace pour une vitre panoramique (3) d'un véhicule avec une courbure maximale prédéterminée, dans lequel le dispositif d'essuie-glace (1) présente
- un bras d'essuie-glace (4), qui peut être fixé par une extrémité fixe à un arbre de commande d'un mécanisme de pivotement au moyen d'une première articulation oscillante et qui présente une extrémité pivotante (7), et
- une lame d'essuie-glace (8), qui est disposée au moyen d'un logement de lame d'essuie-glace (2) avec une deuxième articulation oscillante sur l'extrémité pivotante (7) du bras d'essuie-glace (4) en décalage latéral par rapport à l'extrémité pivotante (7) du bras d'essuie-glace (4),
- dans lequel le dispositif d'essuie-glace (1) présente un élément élastique (5) entre l'extrémité pivotante (7) du bras d'essuie-glace (4) et la lame d'essuie-glace (8),
**caractérisé en ce que**
- l'élément élastique (5) présente un élément en gomme élastique,
- dans lequel l'élément élastique (5) présente à l'état déchargé une courbure, dans lequel la courbure de l'élément élastique (5) est plus grande que la courbure maximale rencontrée de la vitre panoramique (3).

2. Dispositif d'essuie-glace selon la revendication 1, **caractérisé en ce que** l'élément élastique (5) est disposé dans un soufflet pliant (6).

3. Dispositif d'essuie-glace selon la revendication 2, **caractérisé en ce que** l'élément élastique (5) est à l'état chargé précontraint en direction de la surface (9) de la vitre panoramique (3).

4. Dispositif d'essuie-glace selon la revendication 2, **caractérisé en ce que** l'élément élastique (5) est disposé entre la lame d'essuie-glace (8) et le logement de lame d'essuie-glace (2), dans lequel le logement de lame d'essuie-glace (2) est fixé avec la deuxième articulation oscillante à l'extrémité pivotante (7) du bras d'essuie-glace (4).

5. Dispositif d'essuie-glace selon l'une quelconque des revendications 1 à 3, **caractérisé en ce que** l'élément élastique (5) est disposé entre le logement de lame d'essuie-glace (2) et l'extrémité pivotante (7) du bras d'essuie-glace (4), dans lequel le logement de lame d'essuie-glace (2) est disposé avec la deuxième articulation oscillante en décalage latéral par rapport au bras d'essuie-glace (4).

6. Dispositif d'essuie-glace selon l'une quelconque des revendications 1 à 5, **caractérisé en ce que** l'élément élastique (5) présente un élément en métal*-caoutchouc.
